# EUROPÄISCHE PATENTANMELDUNG

(11) **EP 1 479 591 A2**
(43) Veröffentlichungstag der Anmeldung: **24.11.2004**
(21) Anmeldenummer: 04009495.5
(22) Anmeldetag: 22.04.2004
(51) Int. Cl.: B62B 13/02

(54) **Sportgerät**

(30) Priorität: 23.05.2003 DE 10323334
(71) Anmelder: SUSPA Holding GmbH, 90518 Altdorf (DE)
(72) Erfinder: Böhm, Walter, 90537 Feucht (DE); Seyferth, Siegfried, 91257 Pegnitz-Trockau (DE); Tauber, Jürgen, 95473 Creussen (DE)
(74) Vertreter: Rau, Albrecht

(57) **Zusammenfassung**

Ein Sportgerät (1) umfasst mindestens eine Gleiteinrichtung (2) zum Gleiten auf Schnee oder einem vergieichbar gleitfähigen Untergrund, eine Sitzplatte (44) sowie einen Verbindungsträger (50) zwischen Gleiteinrichtung (2) und Sitzplatte (44). Der Verbindungsträger (50) hat eine Höhenverstelleinrichtung (10) derart, dass der Abstand zwischen der Gleiteinrichtung (2) und der Sitzplatte (44) veränderbar ist. Es resultiert ein gut an die Bedürfnisse eines Benutzers anpassbares Sportgerät (1).

## Beschreibung

Ein derartiges Sportgerät ist bekannt aus der AT 002 724 U 1. Derartige Sportgeräte erfreuen sich als Alternative zum Ski-, Snowboard- und Schlittenfahren einer steigenden Beliebtheit. Derzeit werden in der Regel für verschiedene Altersgruppen unterschiedliche Ausführungen solcher Sportgeräte angeboten.

Es besteht der Bedarf, derartige Sportgeräte hinsichtlich Ihrer Gebrauchsmöglichkeiten flexibler und anpassungsfähiger auszugestalten.

Diese Aufgabe wird erfindungsgemäß gelöst durch ein Sportgerät mit den im Kennzeichnungsteil des Anspruchs 1 angegebenen Merkmalen.

Erfindungsgemäß wurde erkannt, dass eine Abstandseinstellung zwischen der Gleiteinrichtung und der Sitzplatte mittels einer Höhenverstelleinrichtung eine Anpassung des Sportgeräts an die Körpergröße des Benutzers erlaubt. Neben einer Grobverstellung zur Umstellung des Sportgeräts zwischen zum Beispiel einer Kinder- und einer Erwachsenenstellung ist auch eine Feineinstellung zur genauen Anpassung der Sitzplattenhöhe an die Bedürfnisse des Benutzers realisierbar. Das Sportgerät kann somit bei älter werdenden Kindern mitwachsen, sodass nicht in relativ kurzen Zeitabständen jeweils eine Neuanschaffung erforderlich ist.

Eine Federeinrichtung gemäß Anspruch 2 erhöht den Komfort bei der Benutzung des Sportgeräts. Bevorzugt ist auch die Federhärte der Federeinrichtung an das Körpergewicht des Benutzers anpassbar. Bevorzugt kann zu diesem Zweck eine Gas-Druckfeder eingesetzt werden, die in ihrer beispielsweise aus der DE 43 13 766 A 1 bekannten prinzipiellen Ausführung zum Beispiel bei Stühlen zum Einsatz kommt. in einer derartigen Gas-Druckfeder sind die Funktionen "Höhenverstellung" und "Federung" elegant kombiniert.

Eine Neigungsverstelleinrichtung gemäß Anspruch 3 erhöht die Flexibilität des Sportgeräts bei der individuellen Anpassung an einen Benutzer zusätzlich. Noch weiter erhöht sich die Flexibilität des Sportgeräts, wenn das bevorzugte Neigungs-Federelement eingesetzt ist. Mit den verschiedenen möglichen Federelementen lässt sich die Charakteristik des Sportgeräts zum Beispiel zwischen sportlich und komfortabel verstellen. Das Neigungs-Federelement kann insbesondere ebenfalls als Gas-Druckfeder ausgeführt sein.

Der Einsatz eines gemeinsamen Betätigungshebels für die beiden Verstellmöglichkeiten gemäß Anspruch 4 führt zu einem kompakten Aufbau des Sportgeräts. Derartige Betätigungshebel für mehrere Verstellmöglichkeiten sind zum Beispiel aus der Stuhltechnik beim gemeinsamen Betätigen einer Rückenlehnenneigung einerseits und einer Sitzhöhenverstellung andererseits durch offenkundige Vorbenutzung bekannt.

Eine Schnell-Montageeinrichtung gemäß Anspruch 5 ermöglicht ein einfaches Zerlegen des Sportgeräts in relativ kompakte Einzelteile, die mit relativ kleinem Stauraum transportiert werden können. Die Schnell-Montageeinrichtung kann zum Beispiel über eine Klemmverbindung sichernde Maden- oder Flügelschrauben realisiert sein. Alternativ kann die Schnell-Montageeinrichtung eine zum Beispiel mit der Sitzplatte verbundene Hülse mit veränderbarem Querschnitt aufweisen, in welche ein zum Beispiel mit der Höhenverstelleinrichtung verbundenes Rohr eingeschoben wird.

Eine Schnell-Montageeinrichtung mit mindestens einer Steckachse nach Anspruch 6 lässt sich konstruktiv einfach realisieren.

Eine Schnell-Montageeinrichtung gemäß Anspruch 7, die in einer der oben genannten Varianten ausgeführt sein kann, verbessert die Möglichkeiten eines kompakten Transports des Sportgeräts zusätzlich.

Wie bei den bekannten Sportgeräten der eingangs genannten Art kann gemäß Anspruch 8 ein Ski als Gleiteinrichtung eingesetzt sein. Das Sportgerät kann hierbei ein- oder auch mehrspurig ausgeführt sein. Alternativ zu einem Ski als Gleiteinrichtung ist auch zum Beispiel mindestens eine Gleitkufe möglich.

Ein Kupplungskörper gemäß Anspruch 9 reduziert den Aufwand bei der Zusammenstellung des Sportgeräts.

Mit einem Kupplungskörper gemäß Anspruch 10 ist eine Adaption des Verbindungsträgers an verschiedene Typen von Skibindungen durch Austausch des Kupplungskörpers möglich.

Ein Ausführungsbeispiel der Erfindung wird nachfolgend anhand der Zeichnung näher erläutert. In dieser zeigen:
- Fig. 1: eine unterbrochen und teilweise geschnitten dargestellte Seitenansicht eines Sportgeräts;
- Fig. 2: eine Aufsicht auf eine Gas-Druckfeder zur Höhenverstellung des Sportgeräts;
- Fig. 3: eine Aufsicht auf einen Verbindungsträger zwischen einer Gleiteinrichtung und einer Sitzplatte des Sportgeräts in vergrößertem Maßstab;
- Fig. 4: einen Schnitt gemäß Linie IV-IV in Fig. 3; und
- Fig. 5: einen Schnitt gemäß Linie V-V in Fig. 3.

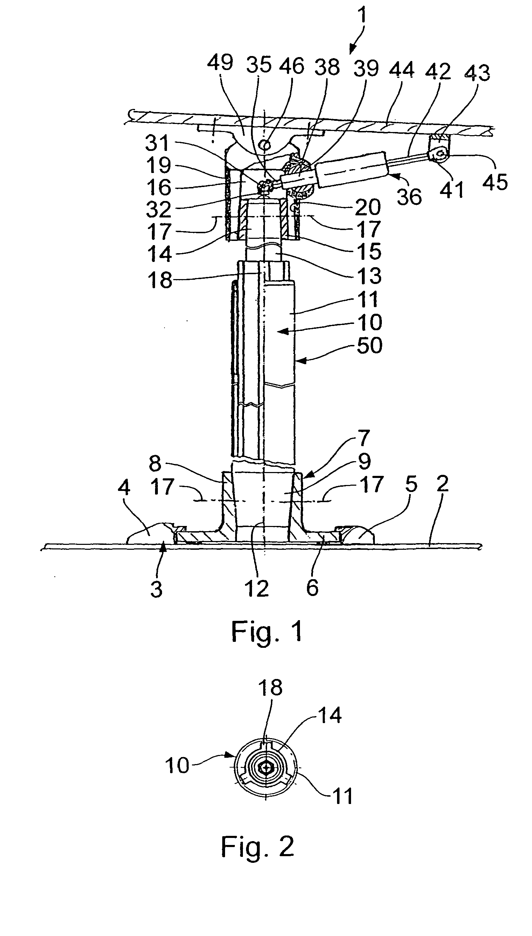

Das in Fig. 1 insgesamt mit dem Bezugszeichen 1 bezeichnete Sportgerät ist als Skibob mit einem in Fig. 1 nur teilweise dargestellten Ski 2 ausgeführt. Beim Ski 2 kann es sich um einen herkömmlichen Abfahrtsski, um einen Kurz-Ski oder auch um einen Carving-Ski handeln. In eine herkömmliche Skibindung 3 mit einem Vorderbacken 4 und einem Fersenbacken 5 ist eine Kupplungsplatte 6 eines Kupplungskörpers 7 eingerastet. Im Bereich der Kupplungsplatte 6 ist der Kupplungskörper 7 wie ein herkömmlicher Skischuh geformt.

Mittig zwischen den Backen 4, 5 der Skibindung 3 geht die Kupplungsplatte 6 des Kupplungskörpers 7 einstückig in eine sich konisch vom Ski 2 aus erweiternde Kupplungshülse 8 über. In letztere ist ein Verbindungskonus 9 eingeschoben, der ein erstes Befestigungselement einer aufrecht stehenden Gas-Druckfeder 10 darstellt. Die dargestellte Ausführung der Gasdruckfeder 10 ist zum Beispiel aus der DE 43 13 766 A 1 bekannt und wird hier nicht nochmals im Einzelnen beschrieben.

Der Verbindungskonus 9 stellt die Fortsetzung eines Standrohrs 11 der Gas-Druckfeder 10 dar. Ein radial im Standrohr 11 abgestütztes und in Richtung einer Längsachse 12 der Gas-Druckfeder 10 längenverstellbares Gehäuseelement 13 geht an seinem freien Ende in einen sich zum freien Ende hin verjüngenden weiteren Verbindungskonus 14 über, der ein zweites Befestigungselement der Gas-Druckfeder 10 darstellt. Der Verbindungskonus 14 ist in eine entsprechend konisch ausgeformte Verbindungshülse 15 eines Steuerkörpers 16 eingeschoben.

Über in der Zeichnung nur angedeutete Verbindungselemente 17 sind der Verbindungskonus 9 in der Kupplungshülse 8 einerseits und der Verbindungskonus 14 in der Verbindungshülse 15 andererseits lösbar miteinander verbunden. Die Verbindungselemente 17 können beispielsweise als Maden- oder Flügelschrauben ausgeführt sein.

Zur Verdrehsicherung der Gas-Druckfeder 10 gegenüber dem Steuerkörper 16 um die Längsachse 12 weist das Gehäuseelement 13 drei Stege 18 (vgl. Fig. 2) auf, die im Wesentlichen parallel zur Längsachse 12 verlaufen und in hierzu komplementäre Nuten im Standrohr 11 eingreifen.

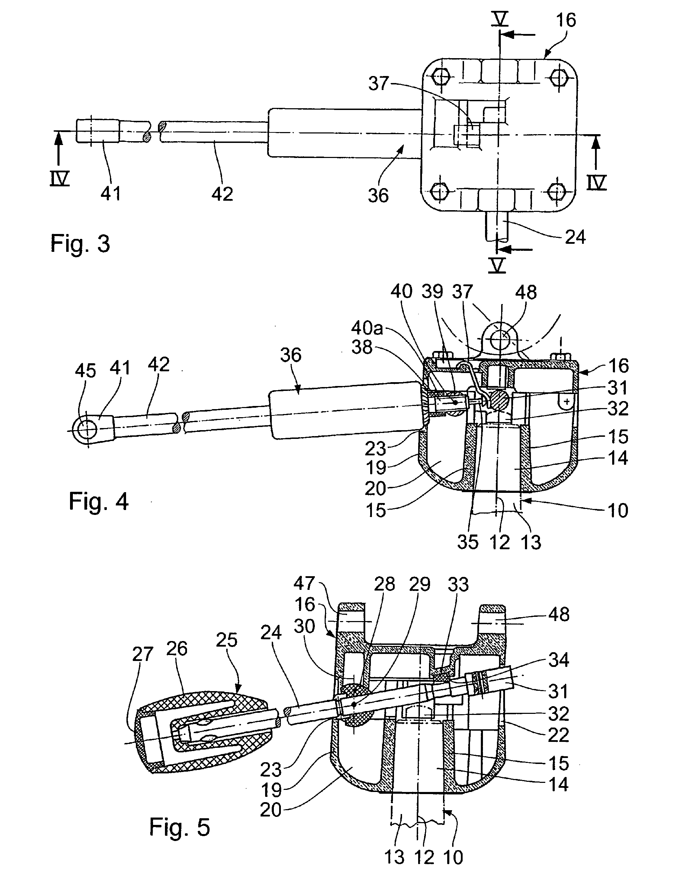

Details des Steuerkörpers 16 zeigen die Fig. 3 bis 5. Diese zeigen eine Ausgestaltung des Steuerkörpers 16, der in einigen Details vom Steuerkörper der Fig. 1 abweicht. Komponenten, die denjenigen entsprechen, die unter Bezugnahme auf die Fig. 1 beschrieben sind, tragen in den Fig. 3 bis 5 die gleichen Bezugszeichen und werden nicht nochmals im einzelnen erläutert.

Einstückig an die Verbindungshülse 15 ist ein Steuerkörpergehäuse 19 angeformt, dessen hohler Innenraum 20 drei Durchtrittsöffnungen 21, 22, 23 aufweist. Die erste Durchtrittsöffnung 21 des Steuergehäuses 19 durchtritt eine Betätigungsstange 24 eines Betätigungshebels 25, welche an ihrem durch die Durchtrittsöffnung 21 tretendem freien Ende einen Betätigungsgriff 26 mit Abschlusskappe 27 aufweist.

Im Innenraum 20 des Steuerkörpergehäuses 19 nach der Durchtrittsöffnung 21 trägt die Betätigungsstange 24 einen kalottenförmigen Lagerkörper 28, der sich so am Steuerkörpergehäuse 19 abstützt, dass die Betätigungsstange 24 relativ zum Steuerkörper 16 um zwei aufeinander senkrecht stehende Achsen verschwenkt werden kann. Eine erste dieser Schwenkachsen, die Schwenkachse 29, steht senkrecht auf der Zeichenebene der Fig. 5 und geht durch den von der Kalotte des Lagerkörpers 28 vorgegebenen Mittelpunkt. Die zweite Schwenkachse 30, die ebenfalls durch diesen Mittelpunkt geht, verläuft parallel zur Längsachse 12 der Gas-Druckfeder 10.

Durch Verschwenken des Betätigungshebels 25 um die Schwenkachse 29 betätigt ein dem Betätigungsgriff 26 gegenüberliegender Betätigungsabschnitt 31 der Betätigungsstange 24 einen oben aus dem Verbindungskonus 14 herausgeführten Betätigungsstift 32 der Gas-Druckfeder 10. Unbetätigt liegt der Betätigungsabschnitt 31 an einem elastischen Pufferkörper 33, der in einer entsprechenden Ausnehmung 34 des Steuerkörpergehäuses 19 aufgenommen ist. Das freie Ende des Betätigungsabschnitts 31 durchtritt die der Durchtrittsöffnung 21 gegenüberliegende Durchtrittsöffnung 22 im Steuerkörpergehäuse 19. Zur Führung einer Bewegung des Betätigungsabschnitts 31 in der Durchtrittsöffnung 22 dient eine am freien Ende des Betätigungsabschnitts 31 angeordnete Führungshülse 31 a. Auch eine anders ausgestaltete Führungskulisse zur Führung der Betätigungsstange 24 des Betätigungshebels 25 im Steuerkörper 16 ist möglich. Eine kulissenförmige Ausbildung der Durchtrittsöffnung 22 führt die möglichen Auslösewege des Betätigungshebels 25 bei einer Verschwenkung von diesem um die Schwenkachsen 29 oder 30.

Durch Verschwenken des Betätigungshebeis 25 um die zweite Schwenkachse 30 betätigt dieser einen weiteren Betätigungsstift 35 einer Neigungsverstellungs-Gasfeder 36, die die dritte Durchtrittsöffnung 23 im Steuerkörpergehäuse 19 durchtritt. Der Betätigungsabschnitt 31 liegt am Betätigungsstift 35 über ein Ende einer elastischen Auslöseklappe 37 an, welche in jeder Schwenklage der Neigungsverstellungs-Gasfeder 36 einen flächigen Kontakt zwischen dem Betätigungsabschnitt 31 und dem Betätigungsstift 35 aufrecht erhält, und die an ihrem anderen Ende am Steuerkörpergehäuse 19 festgelegt ist. Über einen mit einem dem Betätigungsstift 35 benachbarten Gehäuseelement 38 der Neigungsverstellungs-Gasfeder 36 verbundenen Lagerbolzen 39, der horizontal im Steuerkörpergehäuse 19 verläuft, ist die Neigungsverstellungs-Gasfeder 36 um eine senkrecht auf der Zeichenebene der Fig. 4 stehende Schwenkachse 40, die mit der Längsachse des Lagerbolzens 39 zusammenfällt, verschwenkbar. Zwischen dem Lagerbolzen 39 und dem Gehäuse der Neigungsverstellungs-Gasfeder 36 ist auf das Gehäuseelement 38 eine Lagerrolle 40a aufgeschoben, welche als Distanzstück zur Positionierung dient.

Über eine Befestigungslasche 41 ist eine Kolbenstange 42 der Neigungsverstellungs-Gasfeder 36 mit einer weiteren Befestigungslasche 43 einer Sitzplatte 44 des Sportgeräts 1 verbunden. Zu dieser Befestigung dient eine horizontal verlaufende Steckachse 45, die durch miteinander fluchtende Aufnahmen der Befestigungslaschen 41, 43 der Neigungsverstellungs-Gasfeder 36 einerseits und der Sitzplatte 44 andererseits lösbar gesteckt werden kann.

Eine weitere Steckachse 46, die parallel zur Steckachse 45 angeordnet ist, gibt eine Schwenkachse oberhalb der Gas-Druckfeder 10 vor, mit der die Sitzplatte 44 relativ zum Steuerkörper 16 verschwenkt werden kann. Die Steckachse 46 ist durch zwei miteinander fluchtende Steckachsenaufnahmen 47, 48 des Steuerkörpergehäuses 19 sowie durch eine weitere fluchtende Aufnahme einer weiteren Befestigungslasche 49 der Sitzplatte 44 festgelegt.

Der Steuerkörper 16, die Gas-Druckfeder 10 und der Kupplungskörper 7 stellen einen Verbindungsträger 50 zwischen dem Ski 2 und der Sitzplatte 44 dar.

Das Sportgerät 1 wird folgendermaßen benutzt: Zur Anpassung des Sportgeräts 1 an die Körpermaße eines Benutzers betätigt dieser zunächst den Betätigungshebel 25 um die erste Schwenkachse 29, sodass der Betätigungsstift 32 der Gas-Druckfeder 10 betätigt wird. Die Länge der Gas-Druckfeder 10 und damit die Höhe der Sitzplatte 44 über dem Ski 2 lässt sich dann einstellen. Die Gas-Druckfeder 10 dient daher als Höhenverstelleinrichtung. Wenn der Betätigungshebel 25 losgelassen wird, drückt der Betätigungsstift 32 den Betätigungsabschnitt 31 in die Ruheposition, in der dieser am Pufferkörper 33 anliegt. Zur Einstellung der Neigung der Sitzplatte 44 gegenüber der Horizontalen verschwenkt der Benutzer den Betätigungshebel 25 um die zweite Schwenkachse 30. Hierdurch wird der Betätigungsstift 35 der Neigungsverstellungs-Gasfeder 36 bestätigt, die somit in ihrer Länge einstellbar ist. Je nach Länge der Neigungsverstellungs-Gasfeder 36 ändert sich die Neigung der Sitzplatte 44 gegenüber der Auflageebene des Skis 2. Bei der Einstellung der Neigung der Sitzplatte 44 wird diese um die von der Steckachse 46 vorgegebene Schwenkachse verschwenkt. Zusätzlich verschwenkt die sich hierbei in Ihrer Länge verstellende Neigungsverstellungs-Gasfeder 36 um den Lagerbolzen 39 einerseits und um die weitere von der Steckachse 45 vorgegebene Schwenkachse andererseits.

Bei der Fahrt mit dem Sportgerät 1 federt die Sitzplatte 44 aufgrund der federnden Wirkungen der Gas-Druckfeder 10 einerseits und der Neigungsverstellungs-Gasfeder 36 andererseits, welche daher Federeinrichtungen darstellen.

Über die Verbindungselemente 17 und die Steckachsen 45, 46 ist eine schnelle Montage beziehungsweise Demontage des Sportgeräts 1 möglich. Hierbei kann das Sportgerät 1 in drei kompakte Einzelteile zerlegt werden, nämlich in die Sitzplatte 44, den Ski 2 und in den Verbindungsträger 50 mit der Gasfeder 36. Alternativ oder zusätzlich kann über die Verbindungselemente 17 auch eine Trennung zwischen der Gas-Druckfeder 10 und dem Steuerkörper 16 herbeigeführt werden. Dies kann vorteilhaft sein, wenn Sitzplatte 44, Steuerkörper 16 und Neigungsverstellungs-Gasfeder 36 mit einer Verkleidung versehen sind und damit als kompaktes Bauteil von der Gas-Druckfeder 10 lösbar sein sollen. Die Verbindungselemente 17 und die Steckachsen 45, 46 sind Teil einer Schnell-Montageeinrichtung des Sportgeräts 1.

Alternativ kann die Schnell-Montageeinrichtung anstelle der konischen Verbindungshülse 15 eine zum Beispiel mit der Sitzplatte 44 verbundene rohrförmige Hülse mit einem veränderbaren Querschnitt aufweisen, in welche ein zum Beispiel mit der Gas-Druckfeder 10 verbundenes Rohr oder auch direkt ein zylindrisch ausgebildetes Rohrende der Gas-Druckfeder 10 eingeschoben wird. Auf diese Weise kann eine Schnell-Montageeinrichtung nach Art der Schnellspanneinrichtung bei der Höhenverstellung eines Fahrradsattels realisiert werden. Eine derartige Schnell-Montageeinrichtung kann entsprechend auch zwischen der Gas-Druckfeder 10 und dem Kupplungskörper 7 vorgesehen sein.

## Patentansprüche

1. Sportgerät (1)
- mit mindestens einer Gleiteinrichtung (2) zum Gleiten auf Schnee oder einem vergleichbar gleitfähigen Untergrund,
- mit einer Sitzplatte (44),
- mit einem Verbindungsträger (50) zwischen Gleiteinrichtung (2) und Sitzplatte (44),
**dadurch gekennzeichnet, dass**
der Verbindungsträger (50) eine Höhenverstelleinrichtung (10) derart aufweist, dass der Abstand zwischen der Gleiteinrichtung (2) und der Sitzplatte (44) veränderbar ist.

2. Sportgerät (1) nach Anspruch 1, **dadurch gekennzeichnet, dass** der Verbindungsträger (50) eine Federeinrichtung zur Federung der Sitzplatte (44) aufweist, wobei die Höhenverstelleinrichtung und die Federeinrichtung insbesondere gemeinsam in Form einer Gas-Druckfeder (10) ausgeführt sind.

3. Sportgerät nach Anspruch 1 oder 2, **dadurch gekennzeichnet, dass** der Verbindungsträger (50) eine Neigungsverstelleinrichtung (36) für die Sitzplatte (44) aufweist, welche insbesondere ein Neigungs-Federelement umfasst.

4. Sportgerät nach einem der Ansprüche 1 bis 3, **gekennzeichnet durch** einen Betätigungshebel (25), mit dem die Höhenverstelleinrichtung (10) und die Neigungsverstell-Einrichtung (36) gemeinsam bedient werden können.

5. Sportgerät nach einem der Ansprüche 1 bis 4, **dadurch gekennzeichnet, dass** die Sitzplatte (44) und die Höhenverstelleinrichtung (10) über eine Schnell-Montageeinrichtung (17, 45, 46) miteinander verbunden sind.

6. Sportgerät nach Anspruch 5, **dadurch gekennzeichnet, dass** die Sitzplatte (44) und der Verbindungsträger (50) über eine Schnell-Montageeinrichtung (45, 46) miteinander verbunden sind, welche insbesondere mindestens eine Steckachse (45, 46) aufweist, welche sich lösbar durch miteinander fluchtende Aufnahmen (43, 41, 49, 47) der Sitzplatte (44) einerseits und des Verbindungsträgers (50) andererseits erstreckt.

7. Sportgerät nach einem der Ansprüche 1 bis 6, **dadurch gekennzeichnet, dass** der Verbindungsträger (50) und die Gleiteinrichtung (2) über eine Schnell-Montageeinrichtung (17) miteinander verbunden sind.

8. Sportgerät nach einem der Ansprüche 1 bis 7, **dadurch gekennzeichnet, dass** die Gleiteinrichtung (2) als Ski ausgeführt ist.

9. Sportgerät nach Anspruch 8, **dadurch gekennzeichnet, dass** der Verbindungsträger (50) einen Kupplungskörper (7) aufweist, welcher derart geformt ist, dass er mit einer am Ski (2) befestigten Standard-Skibindung (3) formschlüssig verbunden ist.

10. Sportgerät nach Anspruch 9, **dadurch gekennzeichnet, dass** der Kupplungskörper (7) lösbar mit dem Verbindungsträger (50) verbunden ist.

11. Sportgerät nach einem der Ansprüche 1 bis 10, **gekennzeichnet durch** eine Verdrehsicherungseinrichtung (18) zur Verdrehsicherung von Komponenten (11, 13) der Höhenverstelleinrichtung (10) gegeneinander, welche insbesondere mindestens einen Steg (18) an einer der zu sichernden Komponenten (11, 13) aufweist, der in eine hierzu komplementäre Nut in der anderen Komponente (13, 11) eingreift.
